(19) Europäisches Patentamt
European Patent Office
Office européen des brevets

(11) **EP 1 800 902 B1**

(12) **EUROPEAN PATENT SPECIFICATION**

(45) Date of publication and mention
of the grant of the patent:
**02.09.2009 Bulletin 2009/36**

(51) Int Cl.:
***B60C 9/18*** *(2006.01)*     ***B60C 9/20*** *(2006.01)*
***B60C 11/00*** *(2006.01)*

(21) Application number: **05788069.2**

(22) Date of filing: **30.09.2005**

(86) International application number:
**PCT/JP2005/018153**

(87) International publication number:
**WO 2006/035940 (06.04.2006 Gazette 2006/14)**

(54) **PNEUMATIC RADIAL TIRE**

RADIALLUFTREIFEN

PNEUMATIQUE RADIAL

(84) Designated Contracting States:
**FR GB**

(30) Priority: **30.09.2004 JP 2004288488**

(43) Date of publication of application:
**27.06.2007 Bulletin 2007/26**

(73) Proprietor: **Bridgestone Corporation**
**Tokyo 104-8340 (JP)**

(72) Inventor: **Yano, Takeshi,**
**Bridgestone Corporation**
**Tokyo, 1048340 (JP)**

(74) Representative: **Whalley, Kevin**
**Marks & Clerk LLP**
**90 Long Acre**
**London WC2E 9RA (GB)**

(56) References cited:
| | |
|---|---|
| EP-A- 1 110 760 | WO-A-03/061991 |
| WO-A1-03/061991 | FR-A- 2 791 000 |
| JP-A- 6 211 003 | JP-A- 2001 171 312 |
| JP-A- 2004 256 611 | JP-A- 2004 256 611 |

## Description

Technical Field

The present invention pertains to a pneumatic radial tire, and particularly relates to a pneumatic radial tire which is suitable for airplanes, having an excellent wear resistance and thus economy, and at the same time allowing lightness to be achieved.

Background Art

With conventional radial tires, and particularly pneumatic tires for airplanes, the high operating internal pressure, and the action of the centrifugal force during high speed revolution cause the tread surface to be greatly projected in the radial direction, and thus at the time of operation, the tread is brought into the state in which it is greatly elongated in the circumferential direction.

In such a state, the resisting force of the tread rubber in case where the tire treads on a foreign object is weak, and the foreign object tends may penetrate into the tread rubber.

With the structure of the conventional radial tire for airplanes, the belt structure uses an organic fiber having a relatively low modulus of elasticity, such as nylon, or the like, and the width of the respective belts constituting the belt layer is substantially equivalent to the tread width, thus the belt strength of the crown center part, which is dominant on the radial expansion of the tire, is relatively low with respect to the belt strength of the crown shoulder part, which is less dominant, thus the effect of suppressing the radial expansion of the tire has been rendered small.

Contrarily to the above-mentioned conventional tire, with the radial tire as proposed in the Patent Application Laid-open No. WO-A-03/061991, more belt plies are disposed in the belt center part as compared to the number of those in the shoulder part in order to suppress the circumferential elongation of the tread rubber, in other words, the expansion of the tire in the radial direction at the time of air filling to the internal pressure, whereby a great improvement in performance against penetration of a foreign object has been made possible.

Disclosure of the Invention

Subjects to Be Addressed by the Invention

However, while the belt in the conventional structure has a substantially uniform circumferential rigidity over the entire region of the tire crown, the radial tire as proposed in the above reference has a distribution of circumferential rigidity variation of the belt in the tread width direction, thus it has been found that, in case where the tire is manufactured with a tire mold having a geometry similar to that for conventional structure items, the tire ground contact geometry formed in case where, after the tire being filled with air to the internal pressure, a load perpendicular to the road surface is imposed is different from that of the tire of the conventional structure.

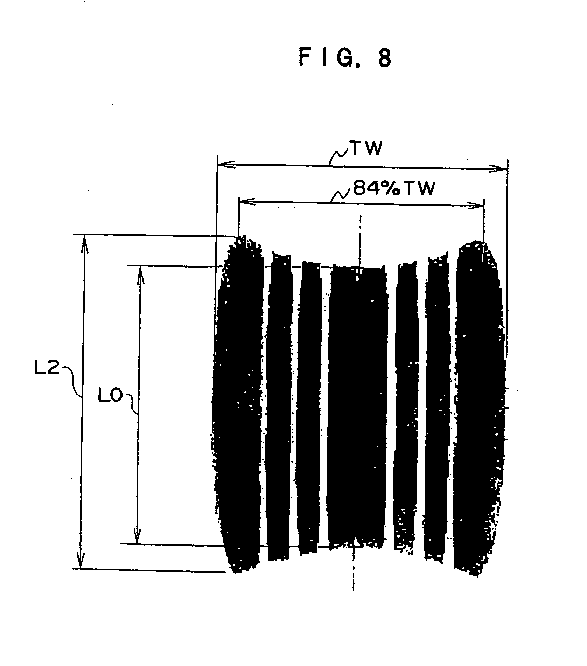

Specifically, a geometry which has a great ground contact length at the shoulder position with respect to the ground contact length in the crown center part was obtained (see FIG 8). This caused that the contact pressure between the tire and the road surface in the crown shoulder part to be extremely increased as compared to that in the crown center part, which directly led to an increase in distortion of the tire under the load.

Such a tire was actually subjected to the takeoff test (FAA TSO-C62d test) as specified by the government agency to evaluate the durability at the time of high speed running, and it has been found that, while the tire of the conventional structure could run the whole distance of 50 cycles with no problems, a trial-manufactured tire of the above reference that was produced with a conventional tire mold had a trouble in the thirty second cycle due to too large an amount of heat generated in the tread rubber.

Generally, as a finding which has been obtained from the development of the conventional radial tire, it is known that the ground contact geometry of a tire under load has a close relationship to the high speed durability and the wear characteristics.

First, with regard to high speed durability, if the ground contact surface has a portion which has locally high ground contact pressure against the road surface, the amount of distortion of the tread rubber is increased in that portion under load, which results in the heat generation amount is increase in the rubber at the time of repetitive revolution.

Especially, with pneumatic tires for airplanes, they are used under the conditions of a high internal pressure and a high load, thus if there is such a region providing a high contact pressure within the ground contact surface, the region having a large heat generation in the tread rubber may be localized in the crown width direction, which will greatly affect the high speed durability of the tire.

From these reasons, it can be understood that, in consideration of the high speed durability, the ground contact geometry preferably has a configuration with which the ground contact length in the circumferential direction is uniform from the crown center part to the shoulder part, or gradually decreased to the shoulder part.

On the other hand, about wear characteristics, the tire wear rate depends upon whether a relative slip is generated between the tire surface and the road surface within the ground contact surface at the time of tire rotating.

In other words, in case where, in the region in which the tire and the road surface are contacted with each other, there occurs no relative slip between the tire and the road surface from beginning to end, the wear rate for the tread rubber is in the negligible range, but in case where, between both, there occurs a relative slip, the wear of the rubber will progress according to the contact pressure in that portion.

As for the relationship with the ground contact geometry, in case where the ground contact length in the crown center part and that in the shoulder part are equivalent to each other, such a result has been obtained as the wear of the rubber was promoted especially in the kick-out portion of the tire during rotating.

Especially, as is the case with the radial tire for airplanes under the conditions of a high internal pressure and a high load, the contact pressure between the tire and the road surface is extremely increased, thus a slight relative motion between both will promote the wear of the tire, and cause a great economical effect.

Thus, when the relationship between each of the two types of performance, i.e., high speed durability and wear resistance, and the ground contact geometry is considered, the ideal ground contact geometry is achieved in such a tire as the circumferential length in the crown center part and that in the shoulder part are equivalent to each other. Thereby, said two types of performance can be obtained.

The present invention has been made in view of the above-mentioned situation, and the purpose thereof is to provide a pneumatic tire for airplanes that assures good high-speed durability and wear characteristics without its excellent durability against foreign object being impaired.

Means to Address the Subjects

The inventor has examined, in detail, the relationship among (1) belt circumferential rigidity distribution at a crown in the tire width direction (a belt rigidity ratio M2/M0), (2) a diameter reduction rate (the diameter reduction ratio 2d/D0) between a crown center part and a shoulder with air being not filled to the internal pressure, and (3) a ground contact length ratio on a ground contact footprint (A = L2/L0, hereinafter to be called "ground contact geometry rectangle rate" or "rectangle rate"), and has found that there is a close correlation among these three aspects.

M0: Circumferential rigidity of the main belt layer at the crown center part P0.

M2: Circumferential rigidity of the main belt layer at a position P2 which is provides at tire width direction 2/3 of a width of the main belt layer.

D0: Tire diameter at the tire equatorial plane when, after air being filled to a prescribed internal pressure, the internal pressure is lowered to within the range from the atmospheric pressure or more to a presasure equal to or less than 5% of the prescribed internal pressure d: Tire radius reduction determined as a differential measured in the tire radial direction between the tread surface at the tire equatorial plane and the tread surface located at 84%-of-TW position (the position corresponding at tire width direction 84% of the width TW of the ground contact footprint produced when, after air being filled to a prescribed internal pressure as given in the TRA standard, the pneumatic tire is loaded with a prescribed load as given in the TRA standard).

In other words, as can be seen with a conventional pneumatic radial tire, with a tire having the rigidity distribution in the tire circumferential direction of the belt is substantially equivalent (M2/M0 is close to 1) from the axial direction center part to the shoulder part of the tire crown, the closer to a smooth line (a straight line) that the geometry of the tire crown is formed, (the closer the value of 2d/D0 becomes 0), the ground contact geometry rectangle rate (L2/L0) will be closer to 1, which will provide a better tire performance.

On the other hand, with the tire structure which is excellent in durability against a stick of a foreign object that is proposed in the above noted reference, said relationship has not been observed. Thus, the inventor has examined the relationship among said respective factors (1) to (3) for numerous cases through trial manufacturing of tires, and as a result, found that, even in case where the belt rigidity ratio is variously changed, the following approximate equation is true about the ground contact geometry rectangle rate.

$$A = 1.3 - 5.0 \times 2d/D0 - 0.33 \times M2/M0$$

where
A: Ground contact geometry rectangle rate (L2/LO)
2d/DO: Tire diameter reduction ratio
M2/M0: Belt circumferential rigidity ratio

(Definition of belt circumferential rigidity)

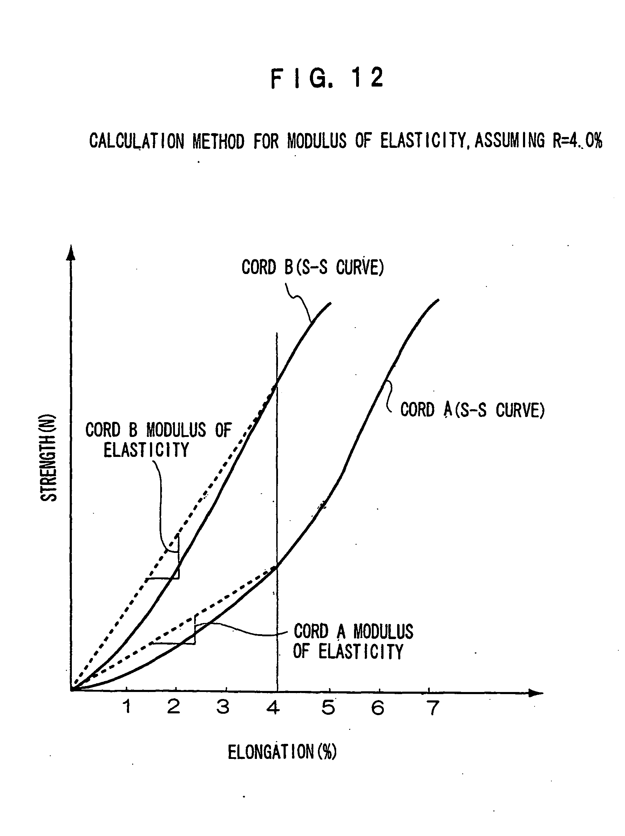

The belt circumferential rigidity mentioned here refers to the circumferential modulus of elasticity for the belt layer, and is calculated by assuming that a growth rate in a tire diameter at the center part from the state in which the tire is not assembled onto a rim to the state in which the tire is assembled onto the rim and filled with air to a prescribed internal pressure is R%, and multiplying modulus of elasticity of the cord that is determined according to a range of elongation percentage of 0 to R% (see FIG 12), by the number of cords (the cord count) per a unit width (herein 10 mm).

The belt circumferential rigidity in case where the cord is inclined at an angle of $\theta$ with respect to the circumferential direction is calculated by multiplying the above-mentioned rigidity per unit by cos $\theta$.

In addition, in case where the cord in the tire extends in wave configuration (zigzag) in the tire circumferential direction, the rigidity thereof is calculated according to the cord as embedded in the tire, i.e., as wavy patterned, instead of calculating the rigidity thereof when the cord is straightened out.

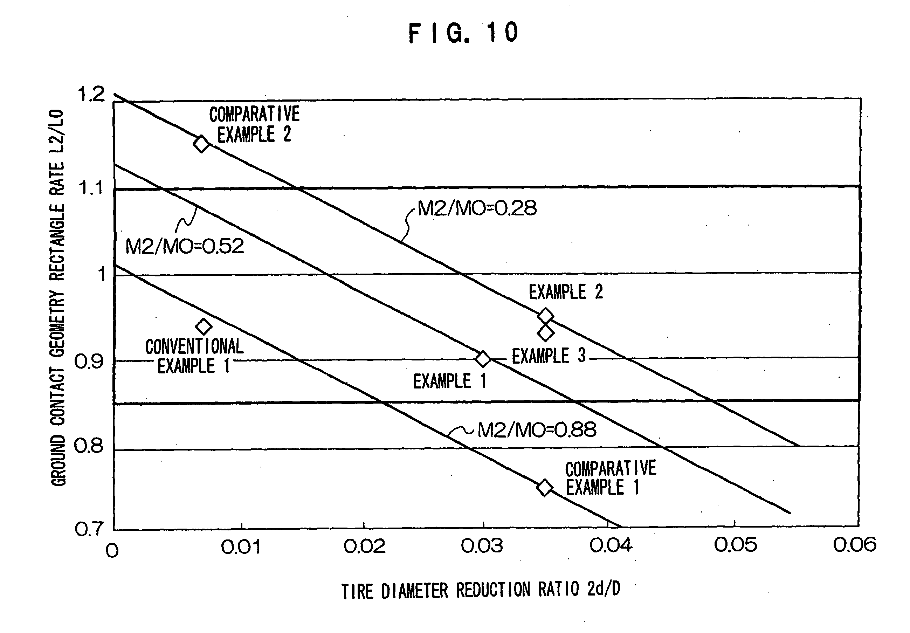

FIG 10 plots the ground contact geometry rectangle rates actually obtained (shown by rhombus symbols) for the trially manufactured tires, and the prediction lines (at three levels of M2/M0 = 0.28, 0.52, 0.88) for the rectangle rate that have been derived from particular belt rigidity ratios and tire diameter reduction ratios by the above equation.

Both the ground contact geometry rectangle rate and the prediction line correspond to each other, and the graph shows that, from a particular belt rigidity ratio and tire diameter reduction ratio, which are design factors, the rectangle rate for a tire can be predicted with high accuracy.

Herein, in case where the ground contact control index is newly defined as F = 5.0 x 2d/D0 + 0.33 x M2/M0, setting F so as to meet the expression 0.2 < F < 0.45 will make it possible to obtain a tire which is excellent in high speed durability and wear resistance, providing a predicted rectangle rate which meets the expression 0.85 < A (= 1.3 - F) < 1.1.

The invention as stated in claim 1 has been made in view of the above-mentioned fact, and provides a pneumatic radial tire, comprising a pair of bead cores; a carcass layer made up of at least one or more carcass plies extending from one bead core toward the other bead core in the shape of a toroid; and a main belt layer which is disposed on the tire radial outer side of said carcass layer, including a plurality of organic fiber cords extending in the tire circumferential direction, wherein, when the pneumatic radial tire is assembled onto a rim, and after air being filled to a prescribed internal pressure as given in the TRA standard, the pneumatic radial tire is loaded with a prescribed load as given in the TRA standard, the width of the ground contact footprint is TW and the width of the main belt layer is BW, then the expression 0.8TW < BW < 1.2TW is satisfied; the number of plies of said main belt layer is gradually decreased from the crown center part P0 to the shoulder part; and when the circumferential rigidity of said main belt layer in the crown center part P0 is M0, the circumferential rigidity of said main belt layer at the position P2 which is provided at width direction 2/3 of the width of said main belt layer is M2, and the belt rigidity ratio is M2/M0, the expression 0.2 < M2/M0 < 0.8 is satisfied; and when, after air being filled to said prescribed internal pressure, the internal pressure is lowered to within the range from the atmospheric pressure or more to a pressure equal to or less than 5% of said prescribed internal pressure, the tire diameter in the tire equatorial plane is D0; with the position at the tread surface that corresponds to 84% of the width TW of said ground contact footprint being called a 84%-of-TW position, the tire radius reduction determined as a differential between the tread surface at the tire equatorial plane and the tread surface at said 84%-of-TW position in the tire radial direction is "d"; and the ground contact control index given by 5.0 $\times$ 2d/D0 + 0.33 $\times$ M2/M0 is F, then the expression 0.2 < F < 0.45 is satisfied.

Next, the function of the pneumatic radial tire as recited in claim 1 will be described.

With the pneumatic radial tire as recited in claim 1, the width TW of the ground contact footprint and the width BW of the main belt layer satisfy the expression 0.8TW < BW < 1.2TW, thus while the high speed durability is ensured, the quantity of required members can be reduced.

If the relation becomes to be 0.8TW $\geq$ BW, a standing wave tends to be generated at the time of high speed running, resulting in the tire durability being extremely deteriorated.

On the other hand, if the relation becomes to be BW $\geq$ 1.2TW, unnecessary quantity of members are to be arranged, thus an increase in weight cannot be avoided.

In addition, the number of plies of the main belt layer, which is a main strength member, is substantially continuously decreased from the crown center part P0 to the shoulder part, and when the circumferential rigidity in the crown center part P0 of said main belt layer is M0 and the circumferential rigidity of the main belt layer at the position P2 which is provided at 2/3 of the width of said main belt layer is M2, the ratio M2/M0 has been specified to be a value greater than 0.2 and smaller than 0.8. As a result, while the quantity of materials used for the main belt layer being minimized, at the time of air filling to the prescribed internal pressure and at the time of high speed revolution, the amount of the tread rubber elongation in the circumferential direction of the tread central region can be efficiently suppressed and expansion of the tire in the tire radial direction can be suppressed.

Because the amount of elongation in the circumferential direction of the tread rubber is suppressed, the degree of tension at the tread rubber is lowered, thereby the resistance to penetration of a foreign object is increased, and even if a foreign object should stick into the tire, the growth of the crack can be suppressed.

Note that, if M2/M0 is over 0.8, more belt plies are disposed in the tire shoulder part, which is less effective in suppression of the tire radial expansion, thus the effect of lightweighting the tire is decreased.

On the other hand, ifM2/MO is under 0.2, a sufficient belt rigidity cannot be provided for the shoulder part, thus at the time of high speed running, a standing wave unpreferably tends to be generated.

In addition, by detailed examination of the correlation among the tire belt rigidity ratio, the tire crown geometry, and the ground contact geometry, a ground contact control index representing the tire ground contact geometry is defined as $F = 5.0 \times 2d/D0 + 0.33 \times M2/M0$, and is set to satisfy the expression $0.2 < F < 0.45$, whereby it has been made possible to easily design a tire which is excellent in high speed durability and wear resistance.

Herein, if F is 0.2 or under, a ground contact length in the shoulder part is extremely increased, thus at the time of high speed running, the amount of heat generated in that portion is increased, which extremely affects the tire durability.

On the other hand, if F is 0.45 or over, a drag wear due to tire dragging on the road surface is caused in the shoulder part at the time of rotation, which lowers the economical advantageous.

The invention as stated in claim 2 provides the pneumatic radial tire of claim 1, wherein, in the tire ground contact footprint produced when the pneumatic radial tire is assembled onto a rim, and after air being filled to a prescribed internal pressure as given in the TRA standard, the pneumatic radial tire is loaded with a prescribed load as given in the TRA standard, the ground contact length of the portion corresponding to the crown center part P0 is L0, and the ground contact length of the portion corresponding to the position at 84% in the width direction of the tire ground contact footprint is L2, the expression $0.85 < L2/L0 < 1.1$ is satisfied.

Next, the function of the pneumatic radial tire as stated in claim 2 will be described.

If the relation L2/L0 is 1.1 or more, the ground contact length in the shoulder part is extremely increased, thus at the time of high speed running, the amount of heat generated in that portion is increased, which extremely deteriorates the tire durability.

On the other hand, if the relation L2/L0 is 0.85 or less, a drag wear due to tire dragging on the road surface is caused in the shoulder part at the time of rotation, which lowers the economical advantageous.

Therefore, it is preferable that the expression $0.85 < L2/L0 < 1.1$ is satisfied.

The invention as stated in claim 3 provides the pneumatic radial tire of claim 1 or claim 2, wherein said main belt layer comprises two or more belt plies which include an organic fiber cord that is spirally wound at an angle of substantially 0 degree with respect to the tire equatorial plane.

Next, the function of the pneumatic radial tire as stated in claim 3 will be described.

The organic fiber cord is spirally wound to bring the cord direction close to 0 degree with respect to the circumferential direction, which allows hooping effect of the radial tire to be exerted to the maximum and the target safety factor to be achieved with a minimum quantity of members.

The "substantially 0 degree" includes an angle of up to 2.0 deg.

The invention as stated in claim 4 provides the pneumatic radial tire of claim 1 or claim 2, wherein said main belt layer is inclined at an angle of 2 to 25 degree with respect to the tire equatorial plane, and comprises two or more belt plies including an organic fiber cord while extending zigzag in the tire circumferential direction, being flexed in the same plane so as to incline toward the opposite direction at the respective ply ends.

Next, the function of the pneumatic radial tire as stated in claim 4 will be described.

The main belt layer is provided at an angle in the range of 2 to 25 degree with respect to the tire equatorial plane, whereby the rigidity can be obtained also in the tire width direction without the hooping effect of the belt being greatly impaired, which has an effect of reducing the drag wear of the shoulder part at the time of rotating.

The invention as stated in claim 5 provides the pneumatic radial tire of any one of claim 1 to claim 4, wherein, in said main belt layer, the layer thickness for said organic fiber cord is rendered the thickest in said crown center part P0, and when the layer thickness for said organic fiber cord in said crown center part P0 is G0, and the layer thickness for said organic fiber cord at the position P2 which is provided at 2/3 width of the maximum width of said main belt layer is G2, the expression $0.35 \leq G2/G0 \leq 0.85$ is satisfied.

Next, the function of the pneumatic radial tire as stated in claim 5 will be described.

The belt layer thickness is set in the above-mentioned range, whereby, in the tire center part, where the greatest effect of suppressing the tire radial expansion is obtained, a high belt rigidity can be ensured, and thus an improvement in FOD (foreign object damage) resistance can be obtained.

Herein, if G2/G0 is more than 0.85, more belt plies are disposed in the tire shoulder part, which is less effective in suppression of the tire radial expansion, thus the effect of lightweighting the tire is decreased.

On the other hand, if G2/G0 is less than 0.35, a sufficient belt rigidity cannot be provided for the shoulder part, thus at the time of high speed running, a standing wave tends to be generated, which is unpreferable for durability.

The invention as stated in claim 6 provides the pneumatic radial tire of any one of claim 1 to claim 5, wherein said main belt layer is made up of at least two or more belt plies including an organic fiber cord which is adapted to have a tensile breaking strength of 6.3 cN/dtex or over; and to have an elongation percentage of 0.2 to 2.0% at a load of 0.3 cN/dtex in the direction of elongation; an elongation percentage of 1.5 to 7.0% at a load of 2.1 cN/dtex in the direction of elongation; and an elongation percentage of 2.2 to 9.3% at a load of 3.2 cN/dtex in the direction of elongation.

Next, the function of the pneumatic radial tire as stated in claim 6 will be described.

With the pneumatic radial tire of the present invention, the number of belt plies is set such that it is substantially decreased from the crown center part P0 to the shoulder part, which has made it possible to suppress the tire radial expansion in the crown center part P0, however, in claim 6, an organic fiber cord having a higher elasticity is used for the belt, whereby the tire radial expansion can be more effectively suppressed.

Thereby, the elongation of the tread rubber in the circumferential direction at the time of air filling to the tire internal pressure is rendered smaller, thus a good durability against a foreign object can be obtained.

As in the present invention, by regulating the strength distribution in the belt layer, both radial expansion suppression and weight reduction can be achieved. If the organic fiber cord having a low elasticity as nylon is used, there arises the need for providing more plies in order to suppress the radial expansion, which leads to an increase in tire weight.

With the pneumatic radial tire as recited in claim 6, the main belt layer is made up of at least two or more belt plies including an organic fiber cord with a high elasticity which tensile breaking strength is specified to be 6.3 cN/dtex or more, whereby the requirement for pressure resistance performance can be satisfied.

Herein, for the organic fiber cord, by specifying the elongation percentage at a load of 2.1 cN/dtex in the direction of elongation to be 1.5 to 7.0%; and the elongation percentage at a load of 3.2 cN/dtex in the direction of elongation to be 2.2 to 9.3%, the suppression of the radial expansion can be achieved.

The reason for the above arrangement is that, with the pneumatic radial tire for airplanes, a cord tension of approx. 2.1 cN/dtex is applied when the internal pressure in the standard state is applied, and a cord tension of approx. 3.2 cN/dtex is applied at the time of high speed running, however, in case where the elongation percentage for the organic fiber cord exceeds the above-mentioned range, the bulging in the tire radial direction at the time of air filling to the tire internal pressure cannot be effectively suppressed, and the performance against a stick of a foreign object cannot be expected.

On the other hand, in case where the elongation percentage for the organic fiber cord falls below the above-mentioned range, the hooping effect of the respective belt plies is too great, which results in the carcass layer 16 being unpreferably bulged in the tire width direction more than required.

Further, the reasons why the elongation percentage for the organic fiber cord at a load of 0.3 cN/dtex in the direction of elongation has been specified to be 0.2 to 2.0% are as follows:

First, for the pneumatic radial tire for airplanes, before vulcanizing the pneumatic radial tire, the tire outside diameter is generally set such that the green tire is expanded by approx. 0.2 to 2.0% in the tire mold.

This is for evenly expanding the tire under the pressure applied from the inside of the green tire at the time of vulcanization, thereby aligning the orientations of the organic fiber cords and eliminating the variation in cord provision.

And, in such a process, a relatively low tension of 0.3 cN/dtex or so is effected to the organic fiber cord, however, if the elongation percentage for the organic fiber cord is over 2.0%, the effect of correcting the cord properties is reduced, and if the elongation percentage is under 0.2%, the cord tension is increased in the tire inflation at the time of vulcanization, resulting in such a fault as the organic fiber cord getting into rubber at the tire inner side in the radial direction.

(Definition of "the load and the internal pressure in the standard state")

As "the load and the internal pressure in the standard state" mentioned above, the load and the internal pressure as prescribed in TRA YEAR BOOK, 2004 edition, are adopted.

For example, for airplane radial tire 1270 x 455 R22 32PR, the prescribed internal pressure is 1620 kPa, and the prescribed load is 24,860 kg.

The organic fiber cord more preferably has an elongation percentage of 0.2 to 1.5% at a load of 0.3 cN/dtex in the direction of elongation; an elongation percentage of 1.5 to 6.5% at a load of 2.1 cN/dtex in the direction of elongation; and an elongation percentage of 2.2 to 8.3% at a load of 3.2 cN/dtex in the direction of elongation.

The invention as recited in claim 7 provides the pneumatic radial tire of any one of claim 1 to claim 6, wherein said main belt layer has a belt ply including an organic fiber cord which includes an aromatic polyamide-based fiber and an aliphatic polyamide-based fiber, and the weight ratio between the aromatic polyamide-based fiber and the aliphatic polyamide-based fiber is from 100 : 10 to 100 : 170.

Next, the function of the pneumatic radial tire as stated in claim 7 will be described.

The organic fiber cord in the main belt layer includes an aromatic polyamide fiber with a high modulus of elasticity and an aliphatic polyamide fiber having a large cord elongation at the time of breaking, whereby both tire radial expansion suppression and safety ensurance at the time of an abnormal load input to the tire resulting in a large cord elongation being generated, can be achieved.

Herein, if the weight ratio between both fibers is under 100 : 10, the effect of utilizing the aliphatic polyamide fiber for improving the cord elongation at the time of breaking will be reduced.

On the other hand, if the weight ratio between both is over 100 : 170, the high modulus of elasticity for the aromatic polyamide will not be provided.

Therefore, the weight ratio between the aromatic polyamide-based fiber and the aliphatic polyamide-based fiber is preferably from 100: 10 to 100 : 170.

Herein, the aliphatic polyamide-based fiber is, for example, 6-nylon, 6,6-nylon, 4,6-nylon fibers, or the like.

Note that the aromatic polyamide-based organic fiber cord and the aliphatic polyamide-based organic fiber cord may be twisted together, or they may be unified before being twisted.

In addition, assuming that the aromatic polyamide-based organic fiber cord is A and the aliphatic polyamide-based organic fiber cord is B, A or B is preliminary-twisted (Z-twisted) before being neatly arranged and final-twisted (S-twisted) in the direction opposite to that for preliminary twist, whereby an organic fiber cord constituting the main belt layer can be obtained.

At the time of preliminary twisting, A or B may be twisted alone, respectively, or A and B may be unified before being twisted.

The number of cords of A and B, or AB (a unified yarn) at the time of preliminary twisting or final twisting may be one or more than one, respectively.

The thread diameter for weaving for A may be the same as or different from that for B.

The form of the mixed twisted yarn may be that in which a loop is produced around the yarn as a core, or the like.

Effect of the Invention

As described above, according to the pneumatic radial tire of the present invention, an excellent effect that good high speed durability and wear characteristics can be obtained without impairing the excellent durability against a foreign object is provided.

Brief Description of Drawings

FIG 1 is a sectional view of a pneumatic radial tire pertaining to a first embodiment;
FIG. 2A is an exploded perspective view of the pneumatic radial tire as shown in FIG 1;
FIG. 2B is a plan view of the cord in a protection layer;
FIG 3 is an enlarged sectional view of the tread of the pneumatic radial tire as shown in FIG 1;
FIG 4 is a plan view of a spiral belt;
FIG 5 is a plan view of an endless zigzag wound belt;
FIG 6 is a footprint of a pneumatic radial tire of conventional example 1;

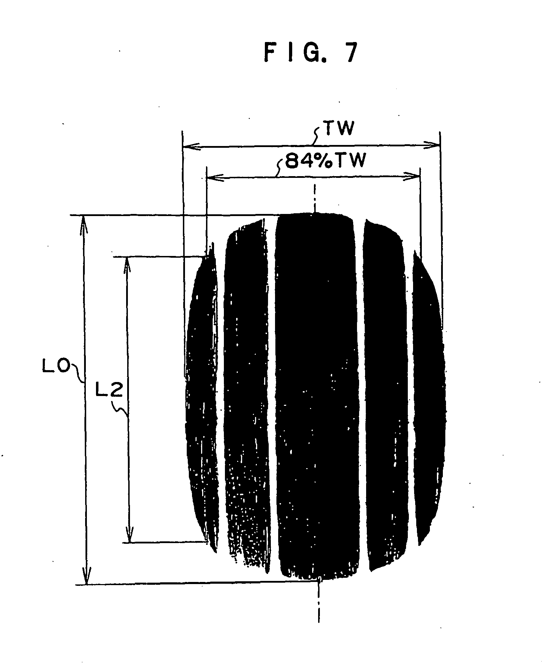

FIG 7 is a footprint of a pneumatic radial tire of comparative example 1;
FIG 8 is a footprint of a pneumatic radial tire of comparative example 2;

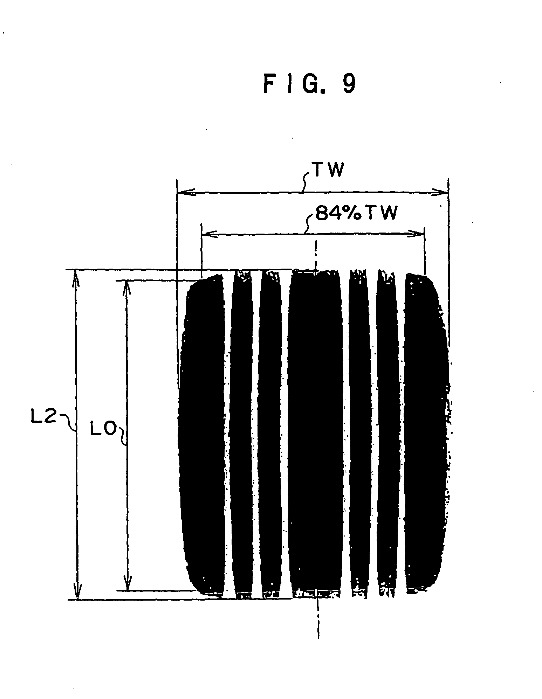

FIG 9 is a footprint of a pneumatic radial tire of present example;
FIG 10 is a graph illustrating the comparison between the ground contact geometry rectangle rates actually obtained (shown by rhombus symbols) for the trially manufactured tires and the prediction lines for rectangle rate that have been derived from particular belt rigidity ratios and tire diameter reduction rates;

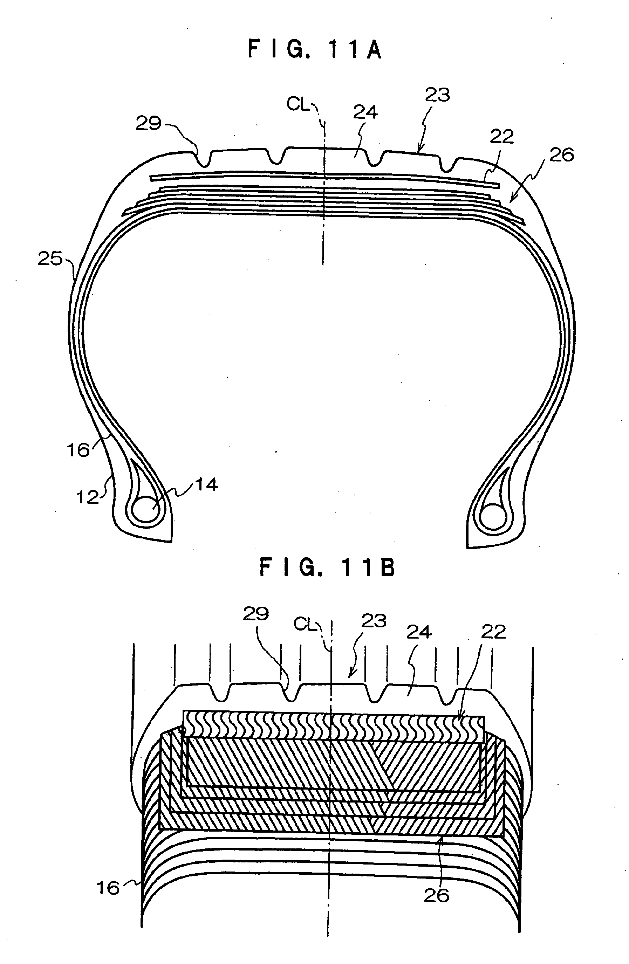

FIG 11A is a sectional view of a pneumatic radial tire pertaining to conventional example 1 and comparative example 1;
FIG 11B is an exploded perspective view of the pneumatic radial tire as shown in FIG 11A;
FIG 12 is a graph illustrating the calculation method for modulus of elasticity;

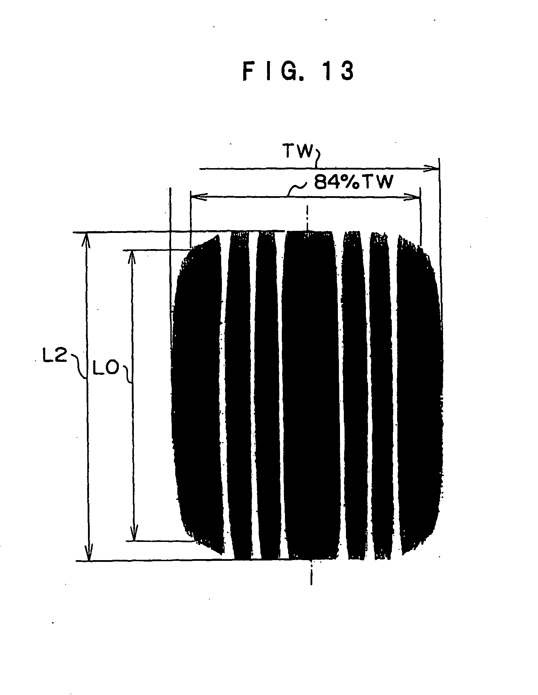

FIG 13 is a footprint of the pneumatic radial tire of EXAMPLE 1; and
FIG. 14 is a footprint of the pneumatic radial tire of EXAMPLE 3.

Best Mode for Carrying Out the Invention

First embodiment
Hereinbelow, exemplary embodiments of the present invention will be described in detail with reference to the drawings.

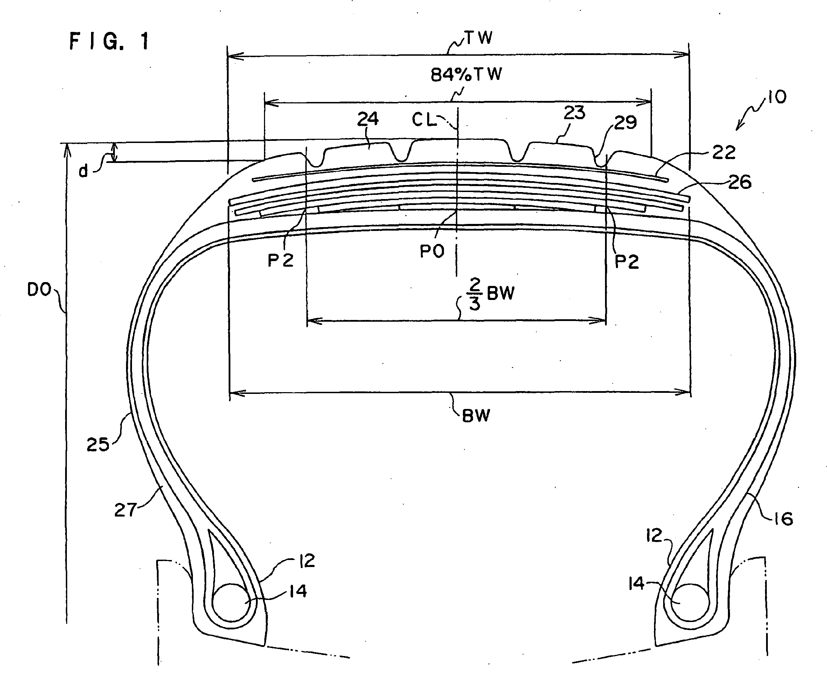

A first embodiment of the pneumatic radial tire of the present invention will be described with reference to FIG 1 to FIG 5.

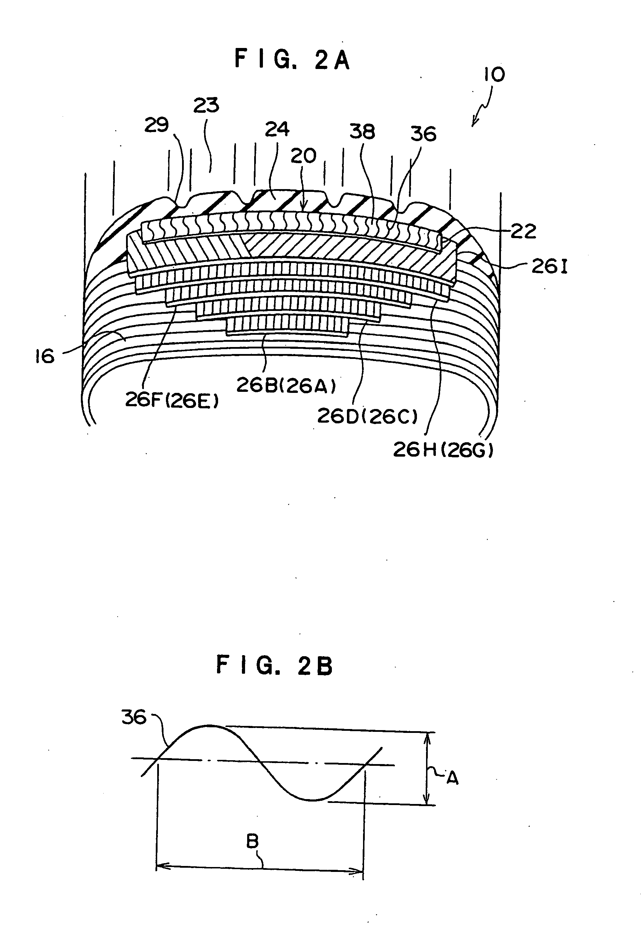

As shown in FIG 1 and FIG 2A, a pneumatic radial tire 10 (with a tire size of 1270 x 455 R22 32PR) for airplane of the present embodiment comprises a bead core 14 having a round section at a bead part 12, and to this bead core 14, a carcass layer 16 made up of six carcass plies (not shown) in which rubber-coated organic fiber cords are arranged in the radial direction is anchored.

The other structural members, such as a flipper, a chafer, and the like, are the same as those in the conventional pneumatic radial tire, and illustration of them is omitted.

On the circumferential surface in the crown region on the outer side in the tire radial direction of the carcass layer 16, a belt layer 20; and on the outer side in the radial direction of the belt layer 20, a tread rubber layer 24 constituting a tread part 23 are provided.

In addition, on the tire width direction outer side of the carcass layer, a side rubber layer 27 constituting a side wall part 25 is provided.

In the present embodiment, the belt layer 20 is made up of a main belt layer 26 provided at inner side in the tire radial direction and a protection belt layer 22 provided at outer side of the main belt layer 26.

(Carcass layer)

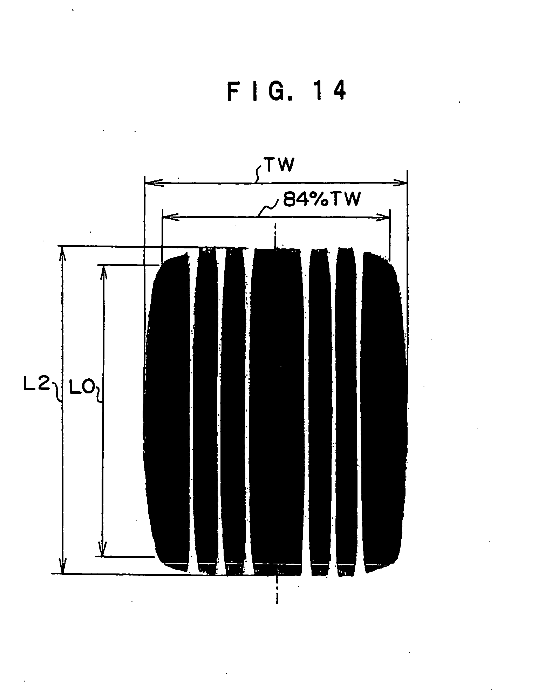

The organic fiber cord to be used for the carcass ply constituting the carcass layer 16 preferably has a tensile breaking strength of 6.3 cN/dtex or more; an elongation percentage of 0.2 to 1.8% at a load of 0.2 cN/dtex in the direction of elongation; an elongation percentage of 1.4 to 6.4% at a load of 1.9 cN/dtex in the direction of elongation; an elongation percentage of at a load of 2.1 to 8.6% at a load of 2.9 cN/dtex in the direction of elongation (see FIG 14).

As the carcass layer 16, an organic fiber cord made up of an aromatic polyamide-based fiber can be used.

In this case, the organic fiber cord preferably has a preliminary twist factor of 0.12 to 0.85, and more preferably of 0.17 to 0.51, and a final twist factor of 0.4 to 0.85.

In addition, as the carcass layer 16, an organic fiber cord (a so-called hybrid cord) comprising an aromatic polyamide-based fiber and an aliphatic polyamide-based fiber can also be used.

In this case, the organic fiber cord preferably has a weight ratio of the aromatic polyamide-based fiber to the aliphatic polyamide-based fiber from 100 : 27 to 100 : 255.

Further, as the carcass layer 16, an organic fiber cord (a so-called hybrid cord) with which an aromatic polyamide-based organic fiber cord and an aliphatic polyamide-based organic fiber cord are twisted together, and the polyamide-based organic fiber cord has a preliminary twist factor N1 of 0.12 to 0.85 and more preferably of 0.17 to 0.51 can also be used.

For the carcass layer 16 in the present embodiment, a nylon cord is used.

(Main belt layer)

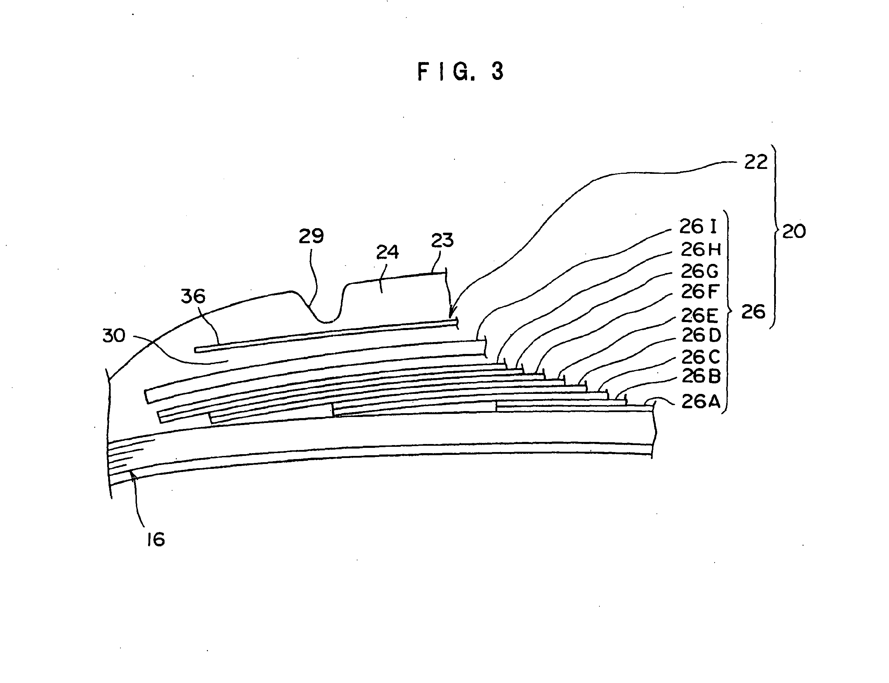

As shown in FIG 3, the main belt layer 26 is made up of a plurality of belt plies, i.e., in the present embodiment, nine belt plies in total of a first belt ply 26A, a second belt ply 26B, a third belt ply 26C, a fourth belt ply 26D, a fifth belt ply 26E, a sixth belt ply 26F, a seventh belt ply 26G, an eighth belt ply 26H, and a ninth belt ply 26I from inner side in the tire radial direction.

In the present embodiment, the first belt ply 26A and the second belt ply 26B are set to have the same width; the third belt ply 26C and the fourth belt ply 26D are set to have the same width; the fifth belt ply 26E and the sixth belt ply 26F are set to have the same width; and the seventh belt ply 26G and the eighth belt ply 26H are set to have the same width.

Further, the belt width of the third belt ply 26C and the fourth belt ply 26D is set wider than that of the first belt ply 26A and the second belt ply 26B; the belt width of the fifth belt ply 26E and the sixth belt ply 26F is set wider than that of the third belt ply 26C and the fourth belt ply 26D; and the belt width of the seventh belt ply 26G and the eighth belt ply 26H is set wider than that of the fifth belt ply 26E and the sixth belt ply 26F.

Therefore, at the tire width direction end of the main belt layer 26, two belt plies of the seventh belt ply 26G and the eighth belt ply 26H are layered.

These first belt ply 26A to eighth belt ply 26H constituting the main belt layer 26 are formed by rubber-coating a plurality of organic fiber cords.

The organic fiber cord of these first belt ply 26A to eighth belt ply 26H preferably has a tensile breaking strength of 6.3 cN/dtex or more; and preferably has an elongation percentage of 0.2 to 2.0% at a load of 0.3 cN/dtex in the direction of elongation; an elongation percentage of 1.5 to 7.0% at a load of 2.1 cN/dtex in the direction of elongation; and an elongation percentage of 2.2 to 9.3% at a load of 3.2 cN/dtex in the direction of elongation.

The organic fiber cord in the present embodiment is made up of an aromatic polyamide-based fiber.

In case where the organic fiber cord is made up of an aromatic polyamide-based fiber, it is preferable to set the preliminary twist factor at 0.12 to 0.85, and preferably at 0.17 to 0.51, and the final twist factor at 0.40 to 0.80.

In the present embodiment, as the first belt ply 26A to the eighth belt ply 26G an organic fiber cord made up of an aromatic polyamide-based fiber, specifically a polyamide fiber manufactured by DuPont (Product type name: KEVLAR(R) 29, with a nominal fineness of 3000 denier; hereinafter it may be called Kevlar as appropriate) is used.

The manufacturing method for the aromatic polyamide-based organic fiber cord will be described below.

By using a twisting machine, three yarns (3000 denier (3340 dtex)) of Kevlar were preliminary-twisted such that the preliminary twist factor is 0.34.

Thereafter, the three preliminary-twisted yarns were neatly arranged for final-twisting (S-twisting) in the direction opposite to that for preliminary twisting such that the final twist factor is 0.48, for making a twisted cord.

Using a cord processing machine manufactured by Ichikin Kogyosha Co., the twisted cord was dip-processed to produce a dipped cord.

At a room temperature of 25 ±2 degree C, the tensile breaking strength of the dipped cord was determined using a testing machine (Autograph, manufactured by Shimadzu Corporation) to obtain a value of 14 cN/dtex.

At this time, the elongation percentages of the dipped cord when stresses of 0.3 cN/dtex, 2.1 cN/dtex, and 3.2 cN/dtex were observed in the direction of pulling the dipped cord were determined to obtain values of 0.3%, 2.2%, and 3.2%, respectively.

Note that the strength of the organic fiber cord (Kevlar cord) which was used for the first belt ply 26A to the eighth belt ply 26G is 1400 N.

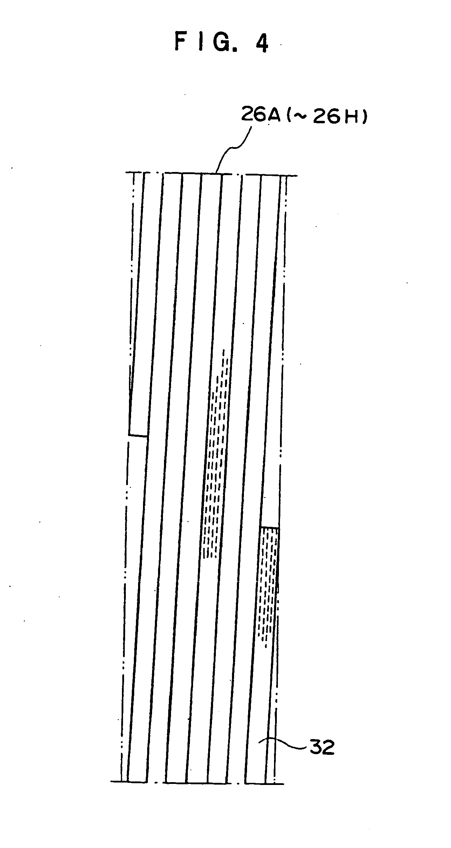

In the present embodiment, the first belt ply 26A to the eighth belt ply 26H constituting the main belt layer 26 is a spiral belt which is formed by preparing a strip-like slender element 32 configured by rubber-coating a plurality of organic fiber cords as shown in FIG 4, and spirally winding this slender element 32 so as not to produce any clearance.

In the present embodiment, the inclination angle for the organic fiber cord is substantially 0 degree with respect to the tire equatorial plane CL.

For the first belt ply 26A to the eighth belt ply 26H, the count for the organic fiber cord is preferably in the range of 4 to 10 per 10 mm.

In the present embodiment, for the first belt ply 26A to the eighth belt ply 26H, the count for the organic fiber cord is 6.3 per 10 mm.

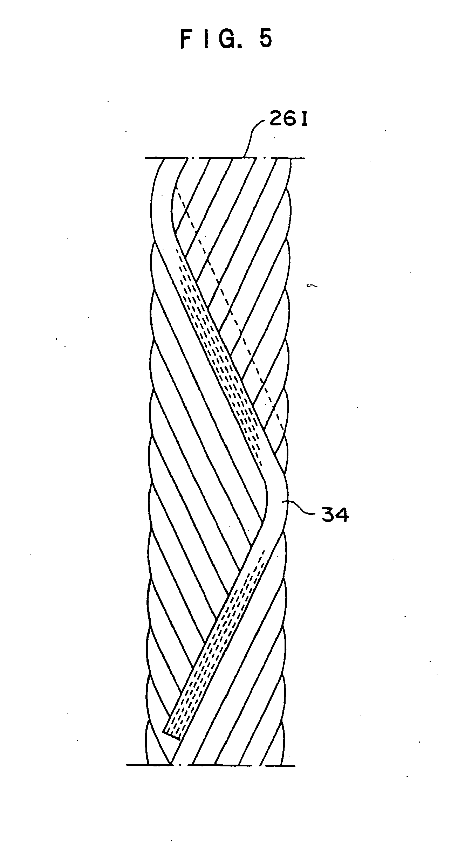

As shown in FIG 5, the ninth belt ply 26I in the present embodiment is formed by preparing a strip-like slender element 34 configured by rubber-coated one or a plurality of organic fiber cords, winding this slender element 34 in the tire circumferential direction with an inclination at an angle of 2 to 25 degree with respect to the tire equatorial plane CL, while reciprocating the slender element 34 by once between both ply ends substantially in every one rounding around the tire circumference, and carrying out such winding at a number of times in the circumferential direction while shifting by substantially the width of the slender element 34 so as not to produce a clearance between slender elements 34 (hereinafter it may be called an endless zigzag wound belt).

As a result, in the ninth belt ply 26I, the organic fiber cord which extends substantially in the tire circumferential direction while zigzagging with the folding direction being changed at both ply ends is uniformly embedded over the entire region of the ninth belt ply 261.

The ninth belt ply 26I thus formed provides a form with which organic fiber cord portions extending in a right upward direction and in a left upward direction with respect to the tire width direction are put one upon another when viewed by the section, which thus provides a configuration equivalent to a so-called cross belt with which a belt ply made up of only the right upward cord and a belt ply made up of only the left upward cord are put one upon another, thus although the ninth belt ply 26I actually provides a single ply, the number of plies for it shall be counted as two in the present embodiment.

For this ninth belt ply 26I, it is preferable to use an organic fiber cord having a modulus of elasticity equivalent to or smaller than that of the organic fiber cord included in the first belt ply 26A to the eighth belt ply 26H (an organic fiber cord having an elongation percentage at a load of 2.1 cN/dtex that is substantially equivalent to or higher than that for the organic fiber cord used in the first belt ply 26A to the eighth belt ply 26H).

As the organic fiber cord to be used as the ninth belt ply 26I, a cord made up of an aliphatic polyamide-based fiber, such as nylon or the like, a cord comprising an aromatic polyamide-based fiber, such as aramid or the like, and an aliphatic polyamide-based fiber, such as nylon or the like, are preferable, and in the present embodiment, a nylon cord (1260D//2/3; count: 6.9 per 10 mm) is used.

In addition, with the ninth belt ply 26I in the present embodiment, which is an endless zigzag wound belt, the inclination angle for the organic fiber cord thereof is preferably in the range of 2 to 25 degree with respect to the tire equatorial plane CL, and in the present embodiment, it is set at 8 degree.

(Belt protection layer)

As shown in FIGS 2A and 3, on the tire radial outer side of the main belt layer 26, the protection belt layer 22 is provided through a rubber layer 30.

The thickness of the rubber layer 30 is preferably in the range of 1.5 to 4.5 mm, and in the present embodiment, it is set at 2.5 mm.

As shown in FIG 2A, the belt protection layer 22 is made up of one cord ply 38 with which a plurality of organic fiber cords 36 extending in wavy shape in the tire circumferential direction are arranged in parallel with one another and coated with rubber (the rubber is not shown).

As shown in FIG 2B, with the organic fiber cord 36 in the belt protection layer 22, it is preferable to have wavy shape with a width A of 5 to 25 mm and a length B of a unit wave at 200 to 700% of the width A.

The organic fiber cords 36 preferably have a high strength and a high cut resistance, and are arranged as tightly as possible while the bonding being ensured.

In the present embodiment, as the organic fiber cord 36 in the belt protection layer 22, a Kevlar cord (3000D/ 3; count: 3.6 per 10 mm) is used.

(Circumferential rigidity of main belt layer)

Next, when the pneumatic radial tire 10 is assembled onto a rim and is loaded with a prescribed load as given in the TRA standard after air being filled to a prescribed internal pressure as given in the TRA standard, the width of the ground contact footprint is TW, and the width of the main belt layer 26 is BW, the pneumatic radial tire 10 meets the expression $0.8TW < BW < 1.2TW$

In addition, if the circumferential rigidity of the main belt layer 26 in the crown center part P0 is M0, and the circumferential rigidity of the main belt layer 26 at the position P2 which provides at width direction 2/3 of maximum width BW of the main belt layer 26 of the about the tire equatorial plane CL is M2, the pneumatic radial tire 10 meets the expression $0.2 < M2/M0 < 0.8$

Hereinbelow, the calculation method for the circumferential rigidity of the main belt layer 26 will be described .

In case where, as in the present embodiment, the main belt layer 26 is made up of a Kevlar cord and a nylon cord, an elongation which provides a strength for a particular cord is calculated according to 10% elongation of the elongation occurred when one Kevlar cord is broken off (in case where the main belt layer 26 is made up of a plurality types of cord, the smallest breaking-off elongation is used as the reference in breaking-off elongations of respective cords).

The strength of the respective cords when they are elongated by 10% is 1400 N for the Kevlar cord, and 205 N for the nylon cord.

For the first belt ply 26A to the eighth belt ply 26H, the cord count per a unit width of 10 mm is 6.2; for the ninth belt ply 26I, the cord count per a unit width of 10 mm is 6.9; and for the belt protection layer 22, the cord count per a unit width of 10 mm is 3.6.

In the present embodiment, in the crown center part P0 of the main belt layer 26, eight Kevlar cords (for the first belt ply 26A to the eighth belt ply 26H) are layered, and two nylon cords (for the ninth belt ply 26I) are layered.

At the position P2 which locates at width direction 2/3 of the maximum width BW of the main belt layer 26, four Kevlar cords are layered and two nylon cords are layered.

In case where, as in the present embodiment, the organic fiber cord is wavy, the strength thereof is calculated in the state that the organic fiber cord as embedded in the tire, i.e., as patterned in wavy configuration is elongated by 10%, instead of calculating the strength thereof when the organic fiber cord is straightened out.

In addition, in case where the organic fiber cord is inclined at an angle of θ with respect to the tire circumferential direction, the cord strength is multiplied by cos θ to calculate the strength in the cord circumferential direction.

Because the nylon cord in the ninth belt ply 261 is inclined with respect to the tire circumferential direction by an angle θ of 10 degrees, the cord strength of the nylon code is multiplied by cos 10 degrees = 0.98 to calculate the strength in the cord circumferential direction.

In addition, if, when, after air being filled to a prescribed internal pressure as given in the TRA standard, the internal pressure is lowered to within the range from the atmospheric pressure or more to under 5% of said prescribed internal pressure, the tire diameter in the tire equatorial plane CL is D0; with the position in the tread surface that corresponds to 84% of the width TW of said ground contact footprint being called a 84%-of-TW position, the tire radius reduction determined in the tire radial direction from the tread surface in the tire equatorial plane CL to the tread surface at said 84%-of-TW position is "d"; and the ground contact control index (which is expressed by $5.0 \times 2d/D0 + 0.33 \times M2/M0$) is F, the pneumatic radial tire 10 of the present embodiment meets the expression $0.2 < F < 0.45$

Further, it is preferable that, in the main belt layer 26, the layer thickness for the organic fiber cord in the crown center part P0 is G0, and the layer thickness for the organic fiber cord at the position P2 which is provided at 2/3 in the width direction of the maximum width BW of the main belt layer 26 is G2, the expression $0.35 \leq G2/G0 \leq 0.85$ be satisfied.

In the present embodiment, G2/G0 is set at 0.63.

Note that in the tread part 23, a plurality of circumferential grooves 29 are formed. (Rectangle rate(Ground Contact Geometry Rectangle Rate))

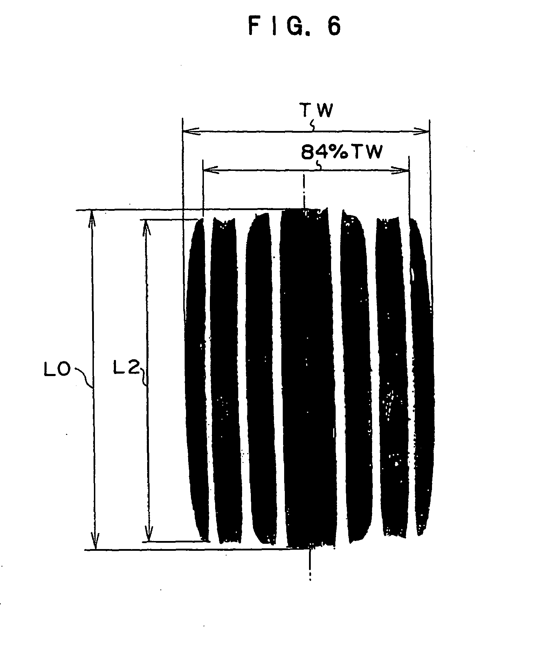

In a tire ground contact footprint (see FIG 6) generated when the pneumatic radial tire 10 is assembled onto a rim, and after air being filled to a prescribed internal pressure as given in the TRA standard, the pneumatic radial tire 10 is loaded with a prescribed load as given in the TRA standard, a length of a portion at the crown center part P0 contacting the ground is L0, and a length of a portion provided at 84% in the width direction of the ground contact footprint contacting the ground is L2, the ratio ofL2/L0 is defined as a rectangle rate (Ground Contact Geometry Rectangle Rate) in the present embodiment.

Herein, the rectangle rate L2/L0 for the pneumatic radial tire 10 preferably meets the expression $0.85 < L2/L0 < 1.1$, and in the present embodiment, the rectangle rate L2/L0 is set at 0.9.

(Function)

With the pneumatic radial tire 10 in the present embodiment, the width TW of the ground contact footprint and the width BW of the main belt layer 26 meets the expression 0.8TW < BW < 1.2TW, thus the high speed durability is ensured, while the quantity of required members can be reduced.

If 0.8TW ≥ BW, a standing wave tends to be generated at the time of high speed running, resulting in the tire durability being extremely affected.

On the other hand, if BW ≥ 1.2TW, excess quantity of members are to be arranged, thus an increase in weight cannot be avoided.

In addition, the number of plies in the main belt layer 26, which is a main strength member, is gradually decreased from the crown center part P0 to the shoulder part, and the ratio M2/M0 between the rigidity M0 in the circumferential direction at the crown center part P0 of the main belt layer 26 and the rigidity M2 in the circumferential direction at the position P2 of the main belt layer 26 which is provided at width direction 2/3 of the width of the main belt layer 26 is set at a value greater than 0.2 and smaller than 0.8, thus while the quantity of materials used for the main belt layer 26 being minimized, the tread rubber circumferential elongation amount in the circumference direction at the tread central region can be suppressed so that the growth of the tire in the circumferential direction can be suppressed at the time of air filling to a prescribed internal pressure and at the time of high speed revolution.

Accordingly, since the amount of circumferential elongation of the tread rubber layer 24 is suppressed, and thus the degree of tension of the tread rubber layer 24 is lowered, the resistance to penetration of a foreign object is increased, and even if a foreign object should stick into the tire, the growth of the crack can be suppressed.

If M2/M0 is over 0.8, more belt plies are disposed in the tire shoulder part, which is less contributable in suppression of the tire radial growth, thus lightweighting the tire is hindered

On the other hand, if M2/M0 is under 0.2, a sufficient belt rigidity cannot be provided for the shoulder part, thus at the time of high speed running, a standing wave unpreferably tends to be generated.

In addition, by setting the ground contact control index F, which represents the tire ground contact geometry, at 0.2 < F < 0.45, a tire which is excellent in high speed durability and wear resistance can be designed.

IfF is 0.2 or less, the length of the shoulder part contacting the ground is extremely increased, thus at the time of high speed running, the amount of heat generated in that portion is increased, which affect the tire durability.

On the other hand, if F is 0.45 or more, a drag wear due to tire dragging on the road surface is caused in the shoulder part at the time of revolution, which lowers the economy.

In addition, if the rectangle rate L2/L0 for the ground contact footprint is 1.1 or more, the length of the shoulder part contacting the ground is extremely increased, thus at the time of high speed running, the amount of heat generated in that portion is increased, which affect the tire durability.

On the other hand, if the rectangle rate L2/L0 for the ground contact footprint is 0.85 or less, a drag wear due to tire dragging on the road surface is caused in the shoulder part at the time of tire rotation, which lowers the economy.

Therefore, the rectangle rate L2/L0 for a ground contact footprint preferably meets the expression 0.85 < L2/L0 < 1.1.

In addition, with the first belt ply 26A to the eighth belt ply 26H constituting the main belt layer 26, an aromatic polyamide-based organic fiber cord is spirally wound to bring the angle of the cord direction close to 0 deg with respect to the tire circumferential direction, thus the strength of the organic fiber cord can be utilized to the maximum to ensure the circumferential rigidity of the main belt layer 26, which allows the hoop effect of the radial tire to be exerted to the maximum and the target safety factor to be achieved with a minimum quantity of members, while lightweighting being provided.

In addition, in the ninth belt ply 261, which is the closest to the shoulder part, the organic fiber cord is provided with an angle in the range of 2 to 25 degrees with respect to the tire equatorial plane CL (an angle of 8 deg in the present embodiment), whereby the rigidity in the tire width direction can be also obtained without the hoop effect of the belt being greatly impaired, which has an effect of reducing the drag wear at the shoulder part at the time of rotating.

The organic fiber cord in the ninth belt ply 261, which is the outermost belt ply in the main belt layer 26, is inclined at 2 to 25 degrees with respect to the tire equatorial plane CL, whereby, even if the ninth belt ply 26I is cut and a crack should initiate, the crack progresses to reach the belt end portion along the cord, thus the crack can be prevented from further progressing in the tire circumferential direction.

If the inclination angle of the organic fiber cord in the ninth belt ply 26I with respect to the tire equatorial plane CL is less than 2 degrees, in case where the tire is subjected to a damage by cut, and a crack should initiate and progresses, preventing the crack from progressing in the tire circumferential direction is affected. In addition, the rigidity in the tire width direction cannot be ensured, thus a drag wear tends to be produced.

On the other hand, if the inclination angle of the organic fiber cord in the ninth belt ply 26I with respect to the tire equatorial plane CL is more that 25 degrees, the circumferential rigidity of the belt ply is lowered, which requires the number of belt plies to be increased in order to suppress the tire expansion in the radial direction, which leads tire weight increase.

The ninth belt ply 26I in which the organic fiber cord is extended zigzag in the tire circumferential direction, being folded in the same plane so as to incline toward the opposite direction at the respective ply ends, provides a configuration in which there is no cut end of the organic fiber cord at the ply end in the tire width direction, thus even when a great distortion is caused in the ply end portion in such a case as that where a load in the width direction is imposed on the tire, the ninth belt ply 26I is hardly separated from the cover rubber (separation between the cord cut end and the cover rubber).

In addition, in the present embodiment, at the outer side of the ninth belt ply 26I in the tire radial direction, the belt protection layer 22 composed with the organic fiber cord 36 and extending in a wavy shape in the tire circumferential direction is disposed via the rubber layer 30 of 2.5 mm in thickness, thus against a stick of a foreign object, or the like, into the tread rubber layer 24, the belt protection layer 22 is deformed in the direction in which the wavy form of the organic fiber cord 36 disappears, wraps the foreign object, or the like, thus penetration of the foreign object, or the like, into the main belt layer 26 can be prevented.

If the thickness of the rubber layer 30 is less than 1.5 mm, it becomes difficult to remove the rubber layer 30 without damaging the main belt layer 26 which is provided at inner side in the radial direction of the rubber layer 30 in tire recycling.

On the other hand, if the thickness of the rubber layer 30 is more than 4.5 mm, not only the tire weight is increased, but also the amount of heat generated in the tread is increased, which is disadvantageous for durability.

In case where a width A of the wavy shape of the organic fiber cord 36 in the belt protection layer 22 is less than 5 mm and a length B of each wave shape is at more than 700% of the amplitude A, filling the pneumatic radial tire 10 with air to the internal pressure and load imposition thereon cause the organic fiber cord 36 to be substantially elongated in the circumferential direction, thus the effect of wrapping in a foreign object at the time of penetration thereof is deteriorated.

On the other hand, when the width A is more than 25 mm and the length B is at less than 200% of the amplitude A, it becomes difficult to ensure a sufficient spacing between adjacent organic fiber cords 36, which makes it impossible to ensure a sufficient rubber layer between cords (a coating rubber layer for covering the organic fiber cord 36), resulting in the contact portion between the rubber layer of the belt protection layer 22 and the tread rubber layer 24 being reduced, and thus the bonding strength between the organic fiber cord 36 and the tread rubber layer 24 being lowered, which tends to cause a separation therebetween

In the present embodiment, the belt protection layer 22 which comprises the organic fiber cord 36 is provided in the outermost layer, thus even if the tread rubber layer 24 should be so worn to cause the belt protection layer 22 to be shown up on the tread surface, no sparks will be produced as with a metallic cord.

The ratio G2/G0 between the layer thickness G0 for the organic fiber cords in the main belt layer 26 in the crown center part P0 and the layer thickness G2 for the organic fiber cord in the main belt layer 26 at the position P2 in the width direction which is provided at 2/3 of the maximum width of the main belt layer 26 meets the expression $0.35 \leq G2/G0 \leq 0.85$, whereby, in the tire center part where the greatest effect of suppressing the tire radial growth is obtained, a high belt rigidity can be ensured, and thus an improvement in FOD (foreign object damage) resistance can be obtained.

Herein, if G2/G0 is over 0.85, more belt plies are disposed in the tire shoulder part, which is less contributable in suppression of the tire radial growth, light weighting the tire is affected.

On the other hand, if G2/G0 is under 0.35, a sufficient belt rigidity cannot be provided for the shoulder part, thus at the time of high speed running, a standing wave tends to be generated, which is unpreferable for durability.

In the present embodiment, the tensile breaking strength of the organic fiber cord constituting the first belt ply 26A to the eighth belt ply 26H in the main belt layer 26 is specified to be 6.3 cN/dtex or over, thus pressure resistance performance could have been satisfied, and the lightweighting could have also been achieved.

In addition, for the organic fiber cord constituting the first belt ply 26A to the eighth belt ply 26H in the main belt layer 26, the elongation percentage at a load of 0.3 cN/dtex in the direction of elongation is specified to be 0.2 to 2.0%; the elongation percentage at a load of 2.1 cN/dtex in the direction of elongation is specified to be 1.5 to 7.0%; and the elongation percentage at a load of 3.2 cN/dtex in the direction of elongation is specified to be 2.2 to 9.3%, thus the target suppression of the radial growth can be achieved. Thereby, the performance against a stick of a foreign object can be ensured, and the hoop effect by the main belt layer 26 can be rendered optimum.

If the elongation percentage for the organic fiber cord constituting the first belt ply 26A to the eighth belt ply 26H in the main belt layer 26 exceeds the above-mentioned range, the bulging in the tire radial direction at the time of air filling to the tire internal pressure cannot be effectively suppressed, and the performance against a stick of a foreign object cannot be expected.

On the other hand, the elongation percentage falls below the above-mentioned range, the hoop effect of the respective belt plies is too great, which results in the carcass layer 16 being unpreferably bulged in the tire width direction more than required.

Further, in the present embodiment, the elongation percentage at a load of 0.3 cN/dtex for the organic fiber cord constituting the first belt ply 26A to the eighth belt ply 26H in the main belt layer 26 is specified to be 0.2 to 2.0%, thus the pneumatic radial tire 10 can be evenly elongated by the pressure applied from the inside of the raw tire at the time of vulcanization, whereby the orientations of the organic fiber cords could have been aligned, with the variation in cord provision being eliminated.

If the elongation percentage at a load of 0.3 cN/dtex for the organic fiber cord is over 2.0%, the effect of correcting the cord properties at the time of vulcanization noted above is unpreferably reduced.

On the other hand, if the elongation percentage at a load of 0.3 cN/dtex for the organic fiber cord is smaller than 0.2%, the cord tension is increased when tire is expanded at the time of vulcanization, which unpreferably results in the organic fiber cord getting into the rubber provided inner side in the tire radial direction of the cord.

In the present embodiment, in the end portion of the main belt layer 26 in the tire width direction, two belt plies of the seventh belt ply 26G and the eighth belt ply 26H are layered, thus even under the condition which involves heavy tension fluctuations in the organic fiber cord in the vicinity of both ends of the tire ground contact surface in the width direction as in tire rotating, especially in case where an external force is applied in the tire width direction, the impact can be effectively distributed with the resilience thereof, thus the reliability of the pneumatic radial tire 10 under hard operating conditions is improved.

The organic fiber cord in the first belt ply 26A to the eighth belt ply 26H constituting the main belt layer 26 is made up of an aromatic polyamide-based fiber, and the preliminary twist factor has been specified to be in the range of 0.12 to 0.85, and the final twist factor to be in the range of 0.40 to 0.80, thus the tensile breaking strength of the organic fiber cord could have been set at 6.3 cN/dtex or over, with the elongation percentage at a load of 0.3 cN/dtex in the direction of elongation having been able to be set at 0.2 to 2.0%; the elongation percentage at a load of 2.1 cN/dtex in the direction of elongation set at 1.5 to 7.0%; and the elongation percentage at a load of 3.2 cN/dtex in the direction of elongation set at 2.2 to 9.3%.

[Second embodiment]

Next, a pneumatic radial tire 10 pertaining to a second embodiment of the present invention will be described. The same components as those in the first embodiment are provided with the same reference numerals and signs, and the explanation thereof is omitted.

With the pneumatic radial tire 10 in the present embodiment, the material of the organic fiber cord in the first belt ply 26A to the eighth belt ply 26H in the main belt layer 26 differs from that of the pneumatic radial tire 10 in the first embodiment, and the organic fiber cord used for the first belt ply 26A to the eighth belt ply 26H in the present embodiment is a so-called hybrid cord which comprises an aromatic polyamide-based fiber and an aliphatic polyamide-based fiber.

The weight ratio between the aromatic polyamide-based fiber and the aliphatic polyamide-based fiber is preferably set from 100 : 10 to 100 : 170, and more preferably from 100 : 17 to 100 : 86.

Thereby, the tensile breaking strength can be set at 6.3 cN/dtex or more; the elongation percentage at a load of 0.3 cN/dtex in the direction of elongation can be set at 0.2 to 2.0%; the elongation percentage at a load of 2.1 cN/dtex in the direction of elongation can be set at 1.5 to 7.0%; and the elongation percentage at a load of 3.2 cN/dtex in the direction of elongation can be set at 2.2 to 9.3%.

In case where the aromatic polyamide-based organic fiber cord and the aliphatic polyamide-based organic fiber cord are twisted together, the preliminary twist factor for the aromatic polyamide-based organic fiber cord is preferably 0.12 to 0.85.

Next, the manufacturing method for such an organic fiber cord will be described.

First, a single yarn which was made by two yarns (3000 denier (3340 dtex)) of Kevlar and two yarns (1260 denier (1400 dtex)) of nylon 66 was prepared, and by using a twisting machine, it was preliminary-twisted such that the preliminary twist factor for Kevlar is 0.34, and the preliminary twist factor for nylon 66 is 0.18.

Thereafter, the two preliminary-twisted yarns of Kevlar and the one preliminary-twisted yarn of nylon 66 were neatly arranged for final-twisting (S-twisting) in the direction opposite to that for preliminary twisting, for making a twisted cord.

Using a cord processing machine manufactured by Ichikin Kogyosha Co., the twisted cord was dip-processed.

At a room temperature of 25 ±2 degree C, the tensile breaking strength of the dipped cord was determined using a testing machine (Autograph, manufactured by Shimadzu Corporation) to obtain a value of 11 cN/dtex.

The elongation percentages of the dipped cord, when stresses of 0.3 cN/dtex, 2.1 cN/dtex, and 3.2 cN/dtex in the direction of pulling were observed with the dipped cord, were determined to obtain values of 1.1%, 5.6%, and 6.6%, respectively.

Note that the breaking strength of this organic fiber cord is 1100 N.

In the present embodiment, as described above, the material of the organic fiber cord in the main belt layer 26 was changed over from that of the pneumatic radial tire 10 in the first embodiment, however, the same effect as that of the pneumatic radial tire 10 in the first embodiment can be obtained.

In addition, because the rigidity in the tire width direction can be obtained, a good effect is given against drag wear of the shoulder part.

(Test Example)

In order to verify the effects of the present invention, one type of conventional example of tire, two types of comparative example tire, and three types of EXAMPLE tire to which the present invention was applied were prepared for carrying out a comparison test for wear characteristics, high speed durability, tire weight, and FOD resistance performance.

The tire size is 1270 $\times$ 455 R22 32PR for every type.

[Table 1]

| | | Conventional example | Comparative example 1 | Comparative example 2 |
|---|---|---|---|---|
| Tire geometry | Tire diameter D0 (mm) | 1210 | | 1230 |
| | Tire diameter reduction d (mm) at a position provided at 84% of ground contact footprint width | 6.5 | 32 | 6.5 |
| | Diameter reduction rate 2d/D0 | 0.01 | 0.053 | 0.01 |
| | Tire expantion ratio in radial direction (%) | 7.0% | | 2.0% |
| Belt structure | Belt structure (material/structure × plies) *1 | Ny/EB × 6 + Ny/KB × 2 + Kev/wavy shaped protection belt × 1 | | Kev/SB × 8 + Ny/EB × 2 + Kev/wavy shaped protection belt × 1 |
| | Belt structure (sectional view) | FIG 11A | | FIG 1 |
| | Belt structure (perspective view) | FIG 11B | | FIG 2A |
| | Main belt layer width (% of ground contact width) | 104% | | 104% |
| | Belt width× plies (% of main belt layer width) (belt material/structure)*1 | 100% × 2 (Ny/EB) | | 100% × 2 (Kev/SB) |
| | | 97% × 2 (Ny/EB) | | 60% × 2 (Kev/SB) |
| | | 94% × 2 (Ny/EB) | | 48% × 2 (Kev/SB) |
| | | 75% × 1 (Ny/KB) | | 33% × 2 (Kev/SB) |
| | | 60% × 1 (Ny/KB) | | 98% × 2 (Ny/EB) |
| | Belt protection layer width (% of ground contact width) | 88% | | 88% |
| | Belt layer thickness ratio (G2/G0) | 0.875 | | 0.40 |

15

(cont.) prev. page

|  |  | Conventional example | Comparative example 1 | Comparative example 2 |
|---|---|---|---|---|
| Belt rigidity ratio | Circumferential modulus of elasticity (Ny/EB) | 121.6 | | 135.9 |
| | Circumferential modulus of elasticity (Ny/KB) | 114.1 | | — |
| | Circumferential modulus of elasticity (Kev/SB) | — | | 775.0 |
| | Circumferential modulus of elasticity (Hy/SB) | — | | — |
| | Center part belt rigidity (M0) | 958 | | 6472 |
| | 2/3 position belt rigidity (M2) | 844 | | 1822 |
| | Belt rigidity ratio (M2/M0) *2 | 0.88 | | 0.28 |
| Ground contact | Ground contact control factor F | 0.343 | 0.553 | 0.145 |
| | Ground contact geometry drawing | FIG. 6 | FIG. 7 | FIG. 8 |
| | Rectangle rate (L2/L0) | 0.94 | 0.79 | 1.15 |
| Performance | Wear resistanse (index) 3* | 100 | 70 | 95 |
| | High-speed durability (index) *4 | 100 | 99 | 55 |
| | Tire weight (index) *5 | 100 | 103 | 93 |
| | FOD durability performance (index) *6 | 100 | 99 | 135 |

[Table 2]

| | | EXAMPLE 1 | EXAMPLE 2 | EXAMPLE 3 |
|---|---|---|---|---|
| Tire geometry | Tire diameter D0 (mm) | | 1230 | |
| | Tire radius reduction d (mm) at position providing 84% of ground contact footprint width | 28 | 35 | 35 |
| | Diameter reduction ratio 2d/D0 | 0.045 | 0.057 | 0.057 |
| | Tire expantion ratio in radial direction (%) | | 2.0% | 4.0% |
| Belt structure | Belt structure (material/structure × plies) 1* | Kev/SB × 8 + Ny/EB × 2 + Kev/wavy protection belt × 1 | | Hy/SB × 8 + Ny/EB × 2 +Kev/wavy protection belt × 1 |
| | Belt structure (sectional view) | | FIG. 1 | |
| | Belt structure (perspective view) | | FIG. 2A | |
| | Main belt layer width (% of ground contact width) | | 101% | |
| | Belt width × plies (% of main belt layer width) (belt material/structure) *1 | 100% × 2 (Kev/SB) | 100% × 2 (Kev/SB) | 100% × 2 (Hy/SB) |
| | | 79% × 2 (Kev/SB) | 60% × 2 (Kev/SB) | 60% × 2 (Hy/SB) |
| | | 45% × 2 (Kev/SB) | 48% × 2 (Kev/SB) | 48% × 2 (Hy/SB) |
| | | 31% × 2 (Kev/SB) | 33% × 2 (Kev/SB) | 33% × 2 (Hy/SB) |
| | | 98% × 2 (Ny/EB) | 98% × 2 (Ny/EB) | 98% × 2 (Ny/EB) |
| | Belt protection layer width (% of ground contact width) | | 85% | |
| | Belt layer thickness ratio (G2/G0) | 0.60 | | 0.40 |

(cont.) prev. page

| | | EXAMPLE 1 | EXAMPLE 2 | EXAMPLE 3 |
|---|---|---|---|---|
| Belt rigidity ratio | Circumferential modulus of elasticity (Ny/EB) | 135.9 | | 110.8 |
| | Circumferential modulus of elasticity (Ny/KB) | — | | — |
| | Circumferential modulus of elasticity (Kev/SB) | 775.0 | | — |
| | Circumferential modulus of elasticity (Hy/SB) | — | | 418.5 |
| | Center part belt rigidity (M0) | 6472 | | 3570 |
| | 2/3 position belt rigidity (M2) | 3372 | | 1059 |
| | Belt rigidity ratio (M2/M0) *2 | 0.52 | 0.28 | 0.30 |
| | Ground contact control factor F | 0.397 | 0.378 | 0.383 |
| Ground contact | Ground contact geometry drawing | FIG 13 | FIG 9 | FIG 14 |
| | Rectangle rate (L2/L0) | 0.9 | 0.95 | 0.93 |
| Performance | Wear resistanse (index) 3* | 102 | 108 | 104 |
| | High-speed durability (index) *4 | 102 | 100 | 101 |
| | Tire weight (index) *5 | 96 | 92 | 92 |
| | FOD durability performance (index) *6 | 147 | 145 | 128 |

*1 Belt material/structure

Ny/EB denotes nylon/endless zigzag belt wound (count: 6.9 per 10 mm; cord angle: 10 deg. See FIG. 5)

Ny/KB denotes nylon/separation belt (count: 8.3 per 10 mm; cord angle: 16 deg)

Kev/SB denotes Kevlar (DuPont tradename)/spiral belt wound (count: 6.2 per 10 mm; cord angle 0 deg. See FIG. 4)

Hy/SB denotes Kevlar and nylon mixed twisted yarn/spiral belt wound (count: 6.2 per 10 mm; cord angle: 0 deg.)

*2 Belt rigidity ratio

The circumferential modulus of elasticity was calculated by the following formula

Modulus of elasticity = (modulus of elasticity for elongation range of 0 to R% for respective cords) × (cord count per 10 mm) × cos (angle with respect to tire circumferential direction).

*3 Wear resistance

With a wear characteristics testing machine, the contact pressure and relative slip at the contact face between the tire and the road surface were determined. On the basis of the value obtained by integrating the wear work amount (= contact pressure × slip amount) over the entire tread surface, the index of wear resistance was calculated. (The value of the item in conventional example 1 is assumed to be 100. The greater the index, the better the performance.)

*4 High speed durability

The takeoff test as specified in the official standard was carried out under the conditions of the prescribed internal pressure and the prescribed load as given in the TRA standard. The number of times of test until a tire failure occurs was given as an index. (The value of the item in conventional example 1 is assumed to be 100. The greater the index, the better the performance.)

*5 Tire weight

The value was given as an index, assuming that the value of the item in conventional example 1 is 100. The smaller the index, the more the lightweight tire (the better

performance).

*6  FOD durability

A blade having a sharp edge with a thickness of 3 mm and a width of 500 mm was applied to the tread such that the longitudinal direction of the edge overlaps with the tire in the width direction, and after air being filled to a prescribed internal pressure as given in the TRA standard, a load of 3% of the prescribed load was imposed in the vertical direction, then the cut depth after the load was removed was measured to be given as an index.   (The value of the item in conventional example 1 is assumed to be 100.   The greater the index, the better the performance.)

Industrial Applicability

The pneumatic radial tire of the present invention has an excellent wear resistance, and at the same time, allows lightweighting to be achieved, thus being suitable for airplanes, which requires economical and lightweight tire.

Explanation of reference numerals and signs

10: Pneumatic radial tire

14: Bead core
16: Carcass layer
26: Main belt layer

## Claims

1.  A pneumatic radial tire comprising: a pair of bead cores (14); a carcass layer (16) made up of at least one or more carcass plies extending from one bead core (14) toward the other bead core (14) in the shape of a toroid; and a main belt layer (26) that is disposed on the tire radial direction outer side of said carcass layer (16) and includes a plurality of organic fiber cords extending in the tire circumferential direction; **characterised in that**, when the pneumatic radial tire is assembled onto a rim, air is filled to a prescribed internal pressure as given in the TRA standard, a prescribed load as given in the TRA standard is loaded, and the width of the ground contact footprint is TW and width of the main belt layer (26) is BW, then the expression $0.8TW < BW < 1.2TW$ is satisfied; the number of plies of said main belt layer (26) gradually decreases from the crown center part P0 to the shoulder part; and when the circumferential rigidity of said main belt layer (26) in the crown center part P0 is M0, the circumferential rigidity of said main belt layer (26) at the position P2 that is located at 2/3 the width of said main belt layer is M2, and for the belt rigidity ratio M2/M0, then the expression $0.2 < M2/M0 < 0.8$ is satisfied; and when, after air being filled to said prescribed internal pressure, the internal pressure is lowered to within the range from the atmospheric pressure or more to a pressure equal to or less than 5% of said prescribed internal pressure, the tire diameter in the tire equatorial plane is D0, with the position at the tread surface that corresponds to 84% of the width TW of said ground contact footprint being called an 84%-of-TW position, the tire radius reduction determined in the tire radial direction from the tread surface in the tire equatorial plane to the tread surface at said 84%-of-TW position is "d", and the ground contact control index given by $5.0 \times 2d/DO + 0.33 \times M2/M0$ is F, then the expression $0.2 < F < 0.45$ is satisfied.

2.  The pneumatic radial tire of claim 1, wherein, in the tire ground contact footprint produced when the pneumatic radial tire is assembled onto a rim, and after air being filled to the prescribed internal pressure as given in the TRA standard, the pneumatic radial tire is loaded with the prescribed load as given in the TRA standard, the ground contact length of the portion corresponding to the crown center part P0 is L0, and the ground contact length of the portion corresponding to the position of 84% of the ground contact width is L2, then the expression 0.85 < L2/L0 < 1.1 is satisfied.

3. The pneumatic radial tire of claim 1 or claim 2, wherein said main belt layer (26) comprises two or more belt plies that include an organic fiber cord spirally wound at an angle of substantially 0 degree with respect to the tire equatorial plane.

4. The pneumatic radial tire of claim 1 or claim 2, wherein said main belt layer (26) comprises two or more belt plies including an organic fiber cord and is inclined at an angle of 2 to 25 degree with respect to the tire equatorial plane while extending zigzag in the tire circumferential direction, being flexed in the same plane so as to incline toward the opposite direction at the respective ply ends.

5. The pneumatic radial tire of any one of claim 1 to claim 4, wherein, in said main belt layer (26), the layer thickness for said organic fiber cord is rendered the thickest in said crown center part P0, and if the layer thickness for said organic fiber cord in said crown center part P0 is G0, and the layer thickness for said organic fiber cord at the width position P2 which provides 2/3 of the maximum width of said main belt layer is G2, then the expression $0.35 \leq G2/G0 \leq 0.85$ is satisfied.

6. The pneumatic radial tire of any one of claim 1 to claim 5, wherein said main belt layer (26) is made up of at least two or more belt plies each including an organic fiber cord which is adapted to have a tensile breaking strength of 6.3 cN/dtex or over; and to have an elongation percentage of 0.2 to 2.0% at a load of 0.3 cN/dtex in the direction of elongation; an elongation percentage of 1.5 to 7.0% at a load of 2.1 cN/dtex in the direction of elongation; and an elongation percentage of 2.2 to 9.3% at a load of 3.2 cN/dtex in the direction of elongation.

7. The pneumatic radial tire of any one of claim 1 to claim 6, wherein said main belt layer (26) has a belt ply including an organic fiber cord which is adapted to include an aromatic polyamide-based fiber and an aliphatic polyamide-based fiber, and the weight ratio between the aromatic polyamide-based fiber and the aliphatic polyamide-based fiber is from 100 : 10 to 100 : 170.

**Patentansprüche**

1. Radialer Luftreifen, umfassend: ein Paar Wulstkerne (14); eine Karkassenschicht (16), die aus mindestens einer oder mehreren Karkassenlagen besteht, die sich von einem Wulstkern (14) auf den anderen Wulstkern (14) zu in Form eines Toroids erstrecken; und eine Hauptgürtelschicht (26), die sich auf der in Radialrichtung gelegenen Reifenaußenseite der Karkassenschicht (16) befindet und mehrere Corde aus organischen Fasern einschließt, die sich in der zirkumferentiellen Reifenrichtung erstrecken; **dadurch gekennzeichnet, dass**
wenn der radiale Luftreifen direkt auf eine Felge aufgebracht wird, Luft bis zu einem vorgeschriebenen Innendruck, wie in der TRA-Norm festgelegt, eingefüllt wird, eine vorgeschriebene Belastung, wie in der TRA-Norm festgelegt, aufgebracht wird und die Breite der Bodenkontaktlauffläche TW ist und die Breite der Hauptgürtelschicht (26) BW ist, so wird dem Ausdruck 0,8 TW < BW < 1,2 TW Genüge geleistet;
die Anzahl von Lagen der Hauptgürtelschicht (26) vom Kronenmittelteil P0 zum Schulterteil allmählich abnimmt; und wenn die zirkumferentielle Steifigkeit der Hauptgürtelschicht (26) im Kronenmittelteil P0 M0 ist, so ist die zirkumferentielle Steifigkeit der Hauptgürtelschicht (26) an der Position P2, die sich bei 2/3 der Breite der Hauptgürtelschicht befindet, M2 und für das Gürtelsteifigkeitsverhältnis M2/M0 wird dem Ausdruck 0,2 < M2/M0 < 0,8 Genüge geleistet; und
wenn der Innendruck, nachdem Luft bis zu dem vorgeschriebenen Innendruck eingefüllt worden ist, auf innerhalb des Bereichs vom Luftdruck oder darüber bis zu einem Druck, der dem vorgeschriebenen Innendruck oder weniger als 5 % desselben entspricht, verringert wird, der Reifendurchmesser in der äquatorialen Reifenebene D0 ist, wobei die Position an der Profiloberfläche, die 84 % der Breite TW der Bodenkontaktlauffläche entspricht, "84 % von der TW-Position" genannt wird, die Reifenradiusverringerung, die in der Reifenradialrichtung von der Profiloberfläche in der äquatorialen Reifenebene zur Profiloberfläche an der "84 % von der TW-Position" bestimmt wird, "d" ist und der Bodenkontakt-Regelindex, der durch 5,0 x 2d/D0 + 0,33 x M2/M0 ausgedrückt wird, F ist, so wird dem Ausdruck 0,2 < F < 0,45 Genüge geleistet.

2. Radialer Luftreifen nach Anspruch 1, wobei, wenn im Falle der Bodenkontaktlauffläche, die gebildet wird, wenn der radiale Luftreifen auf eine Felge aufgebracht wird, und nachdem Luft bis zu dem vorgeschriebenen Innendruck, wie er in der TRA-Norm festgelegt ist, eingefüllt worden ist, der radiale Luftreifen mit der vorgeschriebenen Belastung, wie in der TRA-Norm festgelegt, belastet wird, die Bodenkontaktlänge des Abschnitts, der dem Kronenmittelteil P0 entspricht, L0 ist, und die Bodenkontaktlänge des Abschnitts, der der Position 84 % der Bodenkontaktbreite entspricht, L2 ist, so wird dem Ausdruck 0,85 < L2/L0 < 1,1 Genüge geleistet

**3.** Luftreifen nach Anspruch 1 oder Anspruch 2, wobei die Hauptgürtelschicht (26) zwei oder mehrere Gürtellagen umfasst, die einen Cord aus organischen Fasern einschließen, der spiral in einem Winkel von im Wesentlichen 0 Grad mit Bezug auf die äquatoriale Reifenebene gewickelt ist.

**4.** Radialer Luftreifen nach Anspruch 1 oder Anspruch 2, wobei die Hauptgürtelschicht (26) zwei oder mehrere Gürtellagen umfasst, die einen Cord aus organischen Fasern einschließen, und in einem Winkel von 2 bis 25 Grad mit Bezug auf die äquatoriale Reifenebenen geneigt ist, während sie sich in Zickzackform in der zirkumferentiellen Reifenrichtung erstreckt und in derselben Ebene gebogen wird, um auf die entgegengesetzte Richtung zu an den jeweiligen Lagenenden geneigt zu sein.

**5.** Radialer Luftreifen nach einem der Ansprüche 1 bis 4, wobei in der Hauptgürtelschicht (26) die Schichtdicke des Cords aus organischen Fasern im Kronenmittelteil P0 am dicksten gehalten wird und wenn die Schichtdicke des Cords aus organischen Fasern an der Breitenposition P2, die 2/3 der maximalen Breite der Hauptgürtelschicht bereitstellt, G2 ist, so wird dem Ausdruck 0,35 ≤ G2/G0 ≤ 0,85 Genüge geleistet.

**6.** Radialer Luftreifen nach einem der Ansprüche 1 bis 5, wobei die Hauptgürtelschicht (26) aus mindestens zwei oder mehreren Gürtellagen besteht, die jede einen Cord aus organischen Fasern einschließt, der dazu geeignet ist, eine Zugbruchstärke von 6,3 cN/dtex oder mehr aufzuweisen und einen Dehnungsprozentsatz von 0,2 bis 2,0 % unter einer Belastung von 0,3 cN/dtex in der Dehnungsrichtung aufzuweisen; einen Dehnungsprozentsatz von 1,5 bis 7,0 % unter einer Belastung von 2,1 cN/dtex in der Dehnungsrichtung aufzuweisen; und einen Dehnungsprozentsatz von 2,2 bis 9,3 % unter einer Belastung von 3,2 cN/dtex in der Dehnungsrichtung aufzuweisen.

**7.** Radialer Luftreifen nach einem der Ansprüche 1 bis 6, wobei die Hauptgürtelschicht (26) eine Gürtellage aufweist, die einen Cord aus organischen Fasern einschließt, der dazu geeignet ist, eine Faser auf der Basis von aromatischem Polyamid und eine Faser auf der Basis von aliphatischem Polyamid einzuschließen und das Gewichtsverhältnis von Faser auf der Basis von aromatischem Polyamid zu der Faser auf der Basis von aliphatischem Polyamid 100 : 10 bis 100 : 170 beträgt.

**Revendications**

**1.** Pneumatique radial comprenant une paire de tringles (14) ; une couche de carcasse (16) constituée d'au moins un ou plusieurs plis de carcasse s'étendant depuis une tringle (14) vers l'autre tringle (14) sous la forme d'un tore ; et une couche de ceinture principale (26) qui est disposée sur le côté externe de direction radiale de pneu de ladite couche de carcasse (16) et comprend une pluralité de fils câblés de fibres organiques s'étendant dans la direction circonférentielle de pneu ; **caractérisé en ce que**,

lorsque le pneu radial est assemblé sur une jante, de l'air de remplissage est fourni jusqu'à une pression interne prescrite telle que mentionnée dans la norme TRA, une charge prescrite telle que mentionnée dans la norme TRA est chargée, et la largeur d'empreinte de contact au sol est TW et la largeur de la couche de ceinture principale (26) est BW, alors l'expression 0,8 TW < BW < 1,2 TW est satisfaite ;

le nombre de plis de ladite couche de ceinture principale (26) diminue progressivement de la partie centrale de sommet PO à la partie d'épaulement ; et lorsque la rigidité circonférentielle de ladite couche de ceinture principale (26) dans la partie centrale de sommet PO est M0, la rigidité circonférentielle de ladite couche de ceinture principale (26) à la position P2 qui est située aux deux tiers de la largeur de ladite couche de ceinture principale est M2, et pour le rapport de rigidité de ceinture M2/M0, alors l'expression 0,2 < M2/M0 < 0,8 est satisfaite ; et

lorsque, après remplissage d'air jusqu'à ladite pression interne prescrite, la pression interne est diminuée jusqu'à être dans la plage comprise entre la pression atmosphérique, ou plus, et une pression inférieure ou égale à 5 % de ladite pression interne prescrite, le diamètre de pneu dans le plan équatorial de pneu est D0, la position à la surface de bande de roulement qui correspond à 84 % de la largeur TW de ladite empreinte de contact au sol étant appelée une position de 84 % de TW, la réduction de rayon de pneu déterminée dans la direction radiale de pneu depuis la surface de bande de roulement dans le plan équatorial de pneu jusqu'à la surface de bande de roulement à ladite position de 84 % de TW est « d », et l'indice de contrôle de contact au sol donné par 5,0 x 2d/ D0 + 0,33 x M2/M0 est F, alors l'expression 0,2 < F < 0,45 est satisfaite.

**2.** Pneumatique radial selon la revendication 1, dans lequel, dans l'empreinte de contact au sol de pneu produite lorsque le pneu radial est assemblé sur une jante, et après remplissage d'air jusqu'à la pression interne prescrite telle que mentionnée dans la norme TRA, le pneu radial est chargé à la charge prescrite telle que mentionnée dans la norme TRA, la longueur de contact au sol de la partie correspondant à la partie centrale de sommet PO est L0, et la longueur de contact au sol de la partie correspondant à la position de 84 % de la largeur de contact au sol est L2, alors l'expression 0,85 < L2/L0 < 1,1 est satisfaite.

**3.** Pneumatique radial selon la revendication 1 ou la revendication 2, dans lequel ladite couche de ceinture principale (26) comprend deux plis de ceinture, ou plus, qui incluent un fil câblé de fibres organiques enroulé en spirale à un angle de sensiblement 0 degré par rapport au plan équatorial de pneu.

**4.** Pneumatique radial selon la revendication 1 ou la revendication 2, dans lequel ladite couche de ceinture principale (26) comprend deux plis de ceinture, ou plus, incluant un fil câblé de fibres organiques et est inclinée à un angle de 2 à 25 degrés par rapport au plan équatorial de pneu tout en s'étendant en zigzag dans la direction circonférentielle de pneu, étant fléchie dans le même plan afin de s'incliner vers la direction opposée aux extrémités de plis respectives.

**5.** Pneumatique radial selon l'une quelconque des revendications 1 à 4, dans lequel, dans ladite couche de ceinture principale (26), l'épaisseur de couche pour ledit fil câblé de fibres organiques est rendue la plus importante dans ladite partie centrale de sommet PO, et si l'épaisseur de couche pour ledit fil câblé de fibres organiques dans ladite partie centrale de sommet PO est G0, et l'épaisseur de couche pour ledit fil câblé de fibres organiques à la position de largeur P2 qui représente deux tiers de la largeur maximale de ladite couche de ceinture principale est G2, alors l'expression $0,35 \leq G2/G0 \leq 0,85$ est satisfaite.

**6.** Pneumatique radial selon l'une quelconque des revendications 1 à 5, dans lequel ladite couche de ceinture principale (26) est constituée d'au moins deux plis de ceinture, ou plus, incluant chacun un fil câblé de fibres organiques qui est apte à avoir une résistance à la rupture par traction de 6,3 cN/dtex ou plus, et à avoir un pourcentage d'allongement de 0,2 à 2,0 % à une charge de 0,3 cN/dtex dans la direction d'allongement ; un pourcentage d'allongement de 1,5 à 7,0 % à une charge de 2,1 cN/dtex dans la direction d'allongement ; et un pourcentage d'allongement de 2,2 à 9,3 % à une charge de 3,2 cN/dtex dans la direction d'allongement.

**7.** Pneumatique radial selon l'une quelconque des revendications 1 à 6, dans lequel ladite couche de ceinture principale (26) a un pli de ceinture incluant un fil câblé de fibres organiques qui est apte à comprendre une fibre à base de polyamide aromatique et une fibre à base de polyamide aliphatique, et le rapport de poids entre la fibre à base de polyamide aromatique et la fibre à base de polyamide aliphatique est de 100:10 à 100:170.

FIG. 1

EP 1 800 902 B1

# F I G. 2 A

29  23  24  38  36  10

20

22

26I

16

26F(26E)  26B(26A)  26D(26C)

26H(26G)

# F I G. 2 B

36

A

B

EP 1 800 902 B1

# F I G. 4

26A (~26H)

32

# F I G. 5

FIG. 6

F I G. 7

F I G. 8

# F I G. 9

# FIG. 10

## F I G. 1 1 A

## F I G. 1 1 B

# F I G. 1 2

CALCULATION METHOD FOR MODULUS OF ELASTICITY, ASSUMING R=4.0%

# F I G. 13

# F I G. 1 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03061991 A

**Non-patent literature cited in the description**

- TRA YEAR BOOK. 2004